# EUROPEAN PATENT SPECIFICATION

(11) **EP 2 153 965 B1**
(45) Date of publication and mention of the grant of the patent: **20.07.2011**
(21) Application number: 09007008.7
(22) Date of filing: 26.05.2009
(51) Int. Cl.: B29C 35/02

(54) **Method for manufacturing pneumatic tire**
Verfahren zur Herstellung von pneumatischen Reifen
Procédé de fabrication de pneumatique

(30) Priority: 11.08.2008 JP 2008207222
(43) Date of publication of application: 17.02.2010
(73) Proprietor: Sumitomo Rubber Industries, Ltd., Kobe-shi, Hyogo-ken (JP)
(72) Inventor: Miyazaki, Tatsuya, Kobe-shi, Hyogo-ken (JP)
(74) Representative: Manitz, Finsterwald & Partner GbR

(56) References cited:
- EP-A1- 1 757 436
- US-A1- 2004 182 486
- US-A1- 2006 130 952
- US-A1- 2008 009 570

## Description

### Background of the invention

The present invention relates to a method for manufacturing a pneumatic tire, more particularly to a method for vulcanizing a green tire in a mold capable of improving the rolling resistance of the tire.

In general, a pneumatic tire is provided in the tread portion with a tread reinforcing belt comprising a ply of steel cords embedded in a topping rubber.

In recent years, on the other hand, in order to save fuel consumption of the automobiles, the tires are required to reduce the rolling resistance. For that purpose, it is important for the topping rubber of a belt to decrease the loss tangent (tan delta) to reduce the heat generation during running.

The loss tangent of a topping rubber can be decreased by: increasing the content of modified butadiene rubber (modified BR) and/or modified styrene butadiene rubber (modified SBR) in the base rubber and decreasing the content of natural rubber (NR): decreasing the content of reinforcing agent; and/or increasing the crosslinking density by increasing the content of sulfur.

In the case of the method of increasing the crosslinking density, due to the increased sulfur, reversion is liable to occur on the vulcanized topping rubber, therefore, it is difficult to maintain the required properties for the topping rubber.

In the case of the method of decreasing the content of the reinforcing agent, there is a possibility that the reinforcing effect is decreased, and as a result, the complex elastic modulus and strength of the topping rubber become insufficient for the topping rubber.

In the case of the modified BR and modified SBR, it is possible to provide a strong bond between such rubber and the reinforcing agent such as carbon black and silica, and the dispersion of carbon black is enhanced, and as a result, the loss tangent (tan delta) can be reduced.
However, if the content of the modified BR and/or modified SBR in the base rubber of the topping rubber is increased,
there is a problem such that the rupture strength of the topping rubber becomes decreased, and the adhesion with the steel cords (cord adhesion) becomes weak, and as a result, the durability of the tire is deteriorated.

Therefore, on condition that the base rubber of a topping rubber comprises modified BR and/or modified SBR in addition to natural rubber (NR) as its main component, in order to solve the above-mentioned problems underlying the use of the modified BR and/or modified SBR, the present inventor conducted the study of the vulcanizing method invented by the present inventor and disclosed in Japanese Patent Application Publication No.2007-83703.
As a result, it was discovered that, by vulcanizing the topping rubber at lower temperatures in brief, the complex elastic modulus, rupture strength, and cord adhesion required for the topping rubber can be obtained, and the loss tangent can be further decreased at the same time.

US 2008/0009570 A1 discloses a rubber composition, which comprises specific amounts of sulfur, of at least one compound selected from the group consisting of cresol resin, resorcin condensate and modified resorcin condensate, of carbon black and/or silica in a rubber composition further comprising a rubber component including natural rubber and/or isoprene rubber together with at least two kinds of synthetic rubbers selected from the group consisting of butadiene rubber, modified butadiene rubber, styrene-butadiene rubber and modified styrene-butadiene rubber.

US 2006/0130952 A1 relates to a two piece pneumatic tire, which may be prepared by vulcanizing a green tire at a temperature between 100 and 200°C.

### Summary of the Invention

It is therefore, an object of the present invention to provide a method for manufacturing a tire, in which the components and contents of the belt cord topping rubber are specifically defined together with the vulcanizing condition, so that the rolling resistance of the tire can be reduced while improving the durability of the tire.

According to the present invention, a method for manufacturing a tire comprises the steps of:
preparing a green tire provided in a tread portion with a belt composed of steel cords embedded in a unvulcanized topping rubber;
putting the green tire in a mold; and
vulcanizing the green tire together with the unvulcanized topping rubber by heating the green tire from the inside of the tire with a high-temperature heating medium and from the outside of the tire with the mold heated, wherein
the unvulcanized topping rubber comprises 100 parts by mass of base rubber, 25 to 55 parts by mass of carbon black and/or silica, and sulfur;
the base rubber comprises 10 to 45 mass % of modified butadiene rubber and/or modified styrene butadiene rubber with respect to 100 mass % of the base rubber; and
in the step of vulcanizing the green tire, the maximum temperature of the topping rubber in a cord near region within 3 mm distance from the surfaces of the belt cords is controlled within a range of from 140 to 148 deg.c.

### Brief Description of the Drawings

Fig.1 is a cross sectional view of a green tire.
Fig.2 is an enlarged schematic partial cross sectional view of the belt ply.
Fig.3 is a schematic cross sectional view of an apparatus for vulcanizing the green tire.
Fig.4 is a graph showing the temperature in the cord near region as a function of the elapsed time from the beginning of the heating in the tire vulcanizing process.

### Description of the preferred Embodiments

Embodiments of the present invention will now be described in detail in conjunction with the accompanying drawings.

According to the present invention, a method for manufacturing a tire comprises the steps of preparing an unvulcanized tire or green tire 1, putting the green tire 1 in a mold 10, and heating the green tire 1 in the mold 10 to vulcanize the tire.

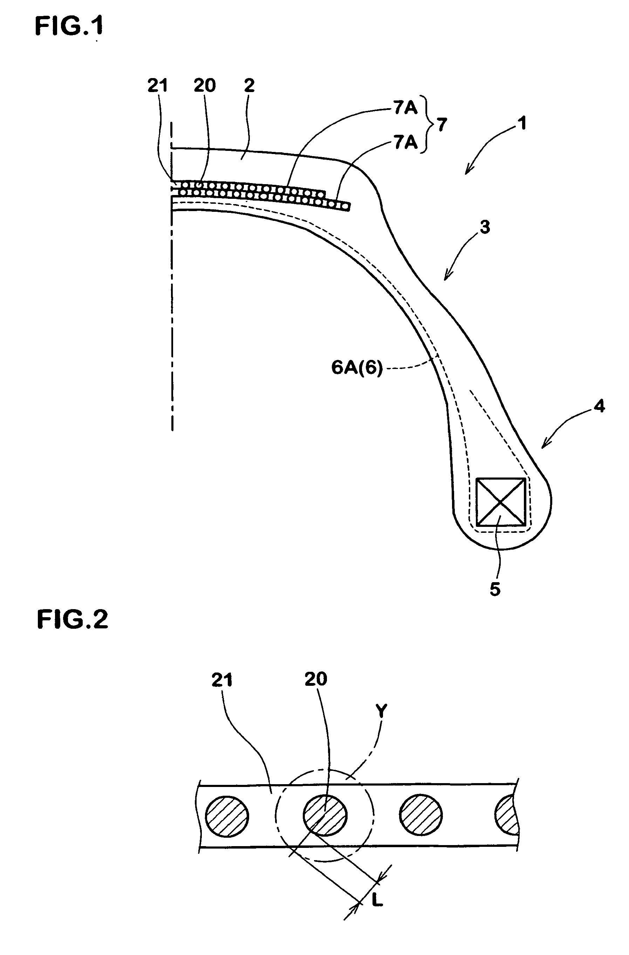

As shown in Fig.1, the green tire 1 comprises a tread portion 2, a pair of bead portions 4 each with a bead core 5 therein, a pair of sidewall portions 3, a carcass 6 extending between the bead portions 4 through the tread portion 2 and sidewall portions 3, and a belt 7 disposed radially outside the carcass 6 in the tread portion 2.

The belt 7 is composed of at least one ply 7A of a plurality of steel cords 20 laid parallel with each other and as shown in Fig.2 embedded in a unvulcanized topping rubber 21 in a form of strip. In this example, the belt 7 is composed of two cross breaker plies 7A of steel cords inclined at angles of from 10 to 45 degrees with respect to the tire circumferential direction.

According to the present invention, the topping rubber 21 comprises 100 parts by mass of base rubber, and 25 to 55 parts by mass of carbon black and/or silica as the reinforcing agent, wherein the base rubber comprises modified butadiene rubber (modified BR) and/or modified styrene butadiene rubber (modified SBR) and diene rubber except for the modified BR and modified SBR.

In the case of the modified BR and modified SBR, the modifying agent on the ends thereof combine strongly with the reinforcing agent (carbon black, silica) and the dispersion of the reinforcing agent is enhanced. As a result, the loss tangent (tan delta) of the topping rubber can be decreased. Additionally, the content of the reinforcing agent is decreased to small values in comparison with conventional belt cord topping rubber, therefore, the decrease in the loss tangent is furthered.

Meanwhile, the use of the modified BR and/or modified SBR involves a disadvantage such that the rupture strength and cord adhesion tends to decrease. Further, the decrease of the content of the reinforcing agent involves a disadvantage such that the complex elastic modulus and rupture strength tend to decrease. Therefore, in the present invention, in order to avoid such disadvantages, the temperature in the heating process is controlled in a special manner.

In order to decrease the loss tangent, the base rubber comprises 10 to 45 mass % of modified butadiene rubber (modified BR) and/or modified styrene butadiene rubber (modified SBR) and the balance being of diene rubber except for the above.

As to the modified BR, preferably used are those obtained by polymerizing as 1,3-butadiene with the use of a lithium polymerization initiator and then adding a tin compound so that the ends of modified BR molecules are connected with each other by tin-carbon bond.

As to the lithium polymerization initiator, for example, lithium compounds such as alkyl lithium, aryl lithium, vinyl lithium, organotin lithium and organic nitrogen lithium compound, and lithium metal can be used. By using such lithium polymerization initiator, high-vinyl low-cis modified BR can be produced.

As to the tin compound, for example, tin tetrachloride, butyltin trichloride, dibutyltin dichloride, dioctyltin dichloride, tributyltin chloride, triphenyltin chloride, diphenyldibutyltin, triphenyltin ethoxide, diphenyl dimethyltin, ditolyltin chloride, diphenyltin dioctanoate, divinyl diethyltin, tetrabenzyltin, dibutyltin distearate, tetraallyltin, p-tributyltin styrene and the like can be used alone or in combination.

The content of the tin atom in the modified BR is preferably set in a range of not less than 50 ppm, more preferably not less than 60 ppm, but not more than 3000 ppm, more preferably not more than 2500 ppm, still more preferably not more than 250 ppm. If the content of the tin atom is less than 50 ppm, the effect to enhance the dispersion of carbon black becomes decreased, and the decrease in the loss tangent becomes insufficient. If the content of the tin atom is more than 3000 ppm, the kneaded compound lacks unity, and it is difficult to form the edges of the extruded rubber compound precisely.

It is preferable that the modified BR has a molecular weight distribution (Mw/Mn) of not more than 2, more preferably not more than 1.5. If the molecular weight distribution (Mw/Mn) is more than 2, the dispersion of carbon black becomes insufficient, and the loss tangent is undesirably increased.

It is also preferable that the modified BR has a vinyl bond content of not less than 5 mass %, more preferably not less than 7 mass %, but not more than 50 mass %, more preferably not more than 20 mass %. If the vinyl bond content of the modified BR is less than 5 mass %, it is difficult to produce the modified BR. If the vinyl bond content of the modified BR is more than 50 mass %, the dispersion of carbon black is deteriorated.

The content of the modified BR with respect to 100 mass % of the base rubber is set to be not less than 10 mass %, preferably not less than 15 mass %, more preferably not less than 20 mass % for less heat generation, but not more than 45 mass %, preferably not more than 40 mass %, more preferably not more than 35 mass % for the rupture strength.
For example, "BR1250H" manufactured by ZEON Corporation is available as a modified BR which satisfying the above-mentioned conditions.

As to the modified SBR, those having a small content of combined styrene such as "HPR340" manufactured by JSR corporation are preferred.

It is preferable that the modified SBR has a combined styrene content of not less than 5 mass %, more preferably not less than 7 mass % to prevent reversion, but not more than 30 mass %, more preferably not more than 20 mass % for less heat generation.

As the modified SBR, emulsion polymerization modified SBR (modified E-SBR) and solution polymerization modified SBR (modified S-SBR) can be used.
Especially, the use of modified S-SBR is preferred because the bond between the polymer chain and silica becomes strong and the loss tangent can be reduced. Further, such a modified SBR coupled with tin or silicon is preferably used.
As a method for coupling the modified SBR, for example, it can be adopted a method to react halogenated tin, halogenated silicon or the like to the alkali metal such as Li or alkali earth metal such as Mg on the ends of the molecule chain of the modified SBR.

The modified SBR is (co)polymer obtained by (co)polymerizing conjugated diolefin and aromatic vinyl compound, or conjugated diolefin alone and preferably having first-grade amino group or alkoxysilyl group.
The first-grade amino group may be coupled with the polymerization initiation end, polymerization termination end, principal chain, or side chain of the polymer. But, it is effectual for improving the hysteresis loss characteristic to control energy loss from the end of polymer, therefore, it is preferable that the first-grade amino group is introduced at the polymerization initiation end or the polymerization termination end.

The weight-average molecular weight(Mw) of the modified SBR is set to be not less than 1,000,000, preferably not less than 1,200,000in view of the rupture strength, but not more than 2,000,000, preferably not more than 1,800,000 in view of the viscosity of rubber and to make the kneading easy.

The content of the modified SBR with respect to 100 mass % of the base rubber is set to be not less than 10 mass %, preferably not less than 15 mass %, more preferably not less than 20 mass % to lower the heat generation, but not more than 45 mass %, preferably not more than 40 mass %, not more than more preferably 35 mass % in view of the rupture strength.

when compared with the modified BR, the modified SBR has a less effect to decrease the loss tangent, but the effect to increase the complex elastic modulus is high, therefore, in view of the durability, the use of the modified SBR is preferable to the modified BR.

AS to the rest of the base rubber other than the modified BR and modified SBR, diene rubber, e.g. natural rubber (NR), isoprene rubber (IR),butadiene rubber (BR), styrene butadiene rubber (SBR), acrylonitrile butadiene rubber (NBR), chloroprene rubber (CR), ethylene-propylene diene rubber (EPDM), styrene isoprene butadiene rubber (SIBR) and the like can be used alone or in combination.

In view of the cord adhesion and rupture strength, it is especially preferable that the rest of the base rubber, namely, diene rubber comprises not less than 55 mass %, preferably not less than 60 mass %, more preferably not less than 70 mass % of natural rubber (NR) and/or isoprene rubber (IR).
Thus, with respect to 100 mass % of the rest of the base rubber, 100 mass % of natural rubber (NR) and/or isoprene rubber (IR) is possible.

Aside from the base rubber, the topping rubber comprises sulfur as the vulcanizing agent, and carbon black and/or silica as the reinforcing agent.

As to the sulfur, insoluble sulfur is preferably used in order to prevent blooming.

The content of the sulfur is set in a range of from 5.5 to 8.5 parts by mass with respect to 100 parts by mass of the base rubber. Such content is more than that in the adjacent rubber such as tread rubber. As a result, the crosslinking density is increased, and the complex elastic modulus can be increased to 5 to 7 MPa for example. Therefore, deformation of the belt in the belt edge portions is decreased and a belt edge separation failure can be controlled.

As to the reinforcing agent, the content of carbon black and/or silica is set to be not more than 55 parts by mass with respect to 100 parts by mass of the base rubber. Such content is relatively small in comparison with those in conventional belt topping rubber. As a result, the decreasing in the heat generation of the topping rubber 21 can be furthered.

Problems such as the decrease in the complex elastic modulus and rupture strength due to the less reinforcing agent, and the decrease in the rupture strength and cord adhesion due to the use of the modified BR and modified SBR, can be solved by the increased content of the sulfur which increases the crosslinking density as well as the tire heating process hereinafter described which also increases the crosslinking density. Further, a problem of the reversion of the vulcanized tipping rubber due to the increased content of the sulfur which tends to cause variation and decrease in the crosslinking density can be solved by the tire heating process.

If the content of the reinforcing agent is more than 55 parts by mass, the loss tangent (tan delta) is increased, and it is difficult to improve the heat generation. On the other hand, if the content of the reinforcing agent is too small, it becomes difficult to maintain the required complex elastic modulus and rupture strength to improve the tire durability. Therefore, the content of the reinforcing agent is preferably set to be not less than 25 parts by mass, more preferably not less than 30 parts by mass, still more preferably not less than 35 parts by mass.

As to the reinforcing agent, it is possible to use carbon black only, or silica only, or both. However, it is especially preferable that the reinforcing agent comprises not less than 5 parts by mass, preferable not less than 8 parts by mass of silica and the balance being of carbon black.

silica has good dispersibility than carbon black, therefore, in view of less heat generation, the use of silica is preferable to carbon black. Silica is hydroscopic, therefore the water is released in the rubber and galvanizes or activates the surface of the coating of the steel cords. As a result, the cord adhesion can be improved.

Silica has a better effect to improve the rupture strength, and carbon black has a better effect to improve the complex elastic modulus, thus, it is preferable to use both in a specific ratio.

Various kinds of carbon black heretofore used in the tire art such as SAF, ISAF, HAF, FEF grades and the like can be used here.

In the case that silica is used, a silane coupling agent is preferably used together. The content of the silane coupling agent is set in a range of from 5 to 12 parts by mass with respect to 100 parts by mass of silica in view of the workability and heat generation. Various kinds of silane coupling agents heretofore used in the tire art can be used.

In this embodiment, the topping rubber 21 comprises at least one compound selected from resorcin, resorcinol condensate, modified resorcinol condensate, cresol resin, and modified cresol resin, and a methylene donor in order to increase the complex elastic modulus while maintaining the loss tangent. These resorcinol compounds react to methylene donors, and increase the complex elastic modulus of the topping rubber 21.

The resorcinol condensate is a compound represented as the following chemical formula 1. 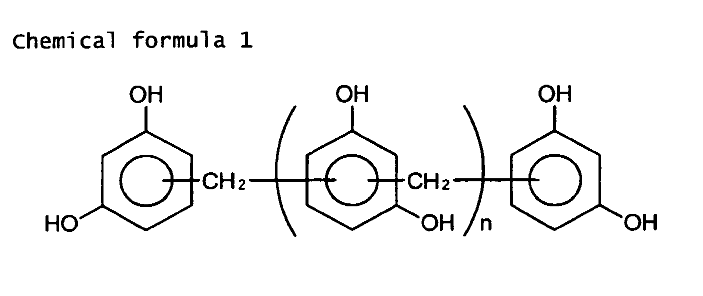 The modified resorcinol condensate is a condensate with resorcin on the ends as shown in the following chemical formula 2.

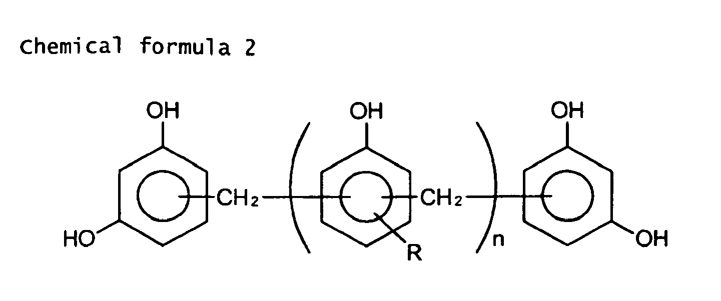

In the chemical formula 2, "R" is alkyl of which number of carbon atoms is preferably not more than 9, more preferably not more than 8, for example, methyl, ethyl, octyl and the like.

In the chemical formulas 1 and 2, "n" are integral numbers. "n" is preferably set in a range of from 2 to 5 because the dispersibility into rubber is good.

In the modified resorcinol condensate represented as the chemical formula 2, the number "n" of repetition units each have resorcin or alkyl phenol. In other words, a unit having resorcin and a unit having alkyl phenol can be mixed.

As the modified resorcinol condensate, for example, Resorcin alkyl phenol formalin copolymer (for example, "Sumikanol 620" available from TAOKA chemical Co,. Ltd.), Resorcinol-formaldehyde-resorcinol polymer resin (for example, "Penacolite resin 1319S" available from INDSPEC Chemical corporation) and the like can be used.

As to the cresol resin, it is desirable to use a meta cresol resin represented as the following chemical formula 3 because the softening point thereof is about 100 deg.C(92 to 107deg.C). Accordingly, the cresol resin is solid at room temperature, but becomes liquid at the time of kneading, and as a result, it is dispersed easily. Further, the reaction temperature to the methylene donor is about 130 deg.C which is lower than the tire vulcanization temperature. 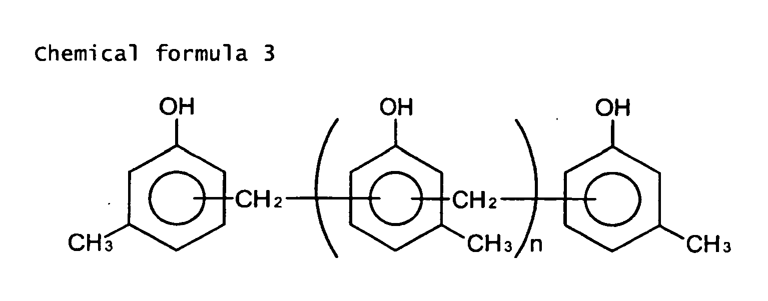 In the chemical formula 3, "n" is not less than 1, preferably not less than 2, but not more than 5.
For example, "Sumikanol 610" available from TAOKA Chemical Co,. Ltd. can be used.

The modified cresol resin is a cresol resin modified such that (1) methyl on the ends of the cresol resin is replaced with hydroxyl or (2) the repetition units of the cresol resin are partially alkylated. In the latter case (2), the number of the carbon atoms in the alkyl in the modified cresol resin is preferably set in a range of from 2 to 5. For example, methyl, octyl and the like can be used.

The content of at least one compound selected from the resorcin, resorcinol condensate, modified resorcinol condensate, cresol resin and modified cresol resin, is preferably set in a range of from 0.5 to 3.0 parts by mass with respect to 100 parts by mass of the base rubber. If the content is less than 0.5 parts by mass, the complex elastic modulus can not be improved. If more than 5 parts by mass, the crosslinking density of the resin becomes increased when compared with the crosslinking density of sulfur, and the heat generation can not be decreased.

As to the methylene donor, for example, hexamethoxy methylolmelamine and derivatives thereof, azadioxabicyclooctane, paraformaldehyde and the like can be used.
More specifically, "Cohedur A" available from Bayer AG, "Cyrez 966, 964" available from American Cyanamid co., "Sumikanol 507" available from TAOKA chemical co,. Ltd., "M-3" available from Uniroyal Inc. and the like can be used for example.

The content of the methylene donor is preferably set in a range of from 0.5 to 1.5 times the content of the above-mentioned at least one compound selected from the resorcin and others.

Further, the topping rubber 21 may comprise additives, for example, aroma oil, age resistor, zinc oxide, stearic acid, vulcanization accelerator, anti-reversion agent and the like according to need.

In the tire heating process according to the present invention, since the vulcanization temperature is relatively low, there is a tendency that a relatively long vulcanization time is required. Therefore, it is preferable that a vulcanization accelerator is used.

Further, since a relatively large amount of sulfur is used, reversion is liable to occur. Therefore, it is preferable that a anti-reversion agent is used.

As to the anti-reversion agent, 1,3-bis (citraconimidomethyl)benzene can be used preferably.

As to the vulcanization accelerator, N,N'-dicyclohexyl-2-benzothiazolesulfenamide (DCBS) available from KAWAGUCHI CHEMICAL INDUSTRY CO., LTD., N-t-Butyl-2-Benzothiazolesulfenamide (TBSI) available from Flexsys K.K. and the like can be used.
Especially, N,N-di(2-ethylhexyl)-2-benzothiazolyl sulfeneamide (BEHZ) available from KAWAGUCHI CHEMICAL INDUSTRY CO., LTD., is used preferably because the rupture strength and cord adhesion can be effectively improved.

The content of the vulcanization accelerator is preferably set in a range of from 0.5 to 2.0 parts by mass with respect to 100 parts by mass of the base rubber.

In this embodiment, as explained above, the content of the reinforcing agent is limited to under 55 parts by mass, and the reinforcing agent comprises not less than 5 parts by mass of silica and the balance being of carbon black. Therefore, due to the presence of silica, the rubber composition is acidic, and as a result, there is a tendency that the vulcanization speed is relatively low in the initial stage of the tire vulcanization. Thus, in order to speed up, the vulcanization accelerator TBSI is preferable to DCBS.

1,3-bis(citraconimidomethyl)benzene functions as the anti-reversion agent not only during vulcanization but also during use of the vulcanized tire.
In general, if rubber is repeatedly subjected to heat during use, the sulfur chains (crosslink) are broken and
recombination/crosslinking occurs, therefore, the elasticity is gradually decreased in use.
However, even if the sulfur crosslink is broken, 1,3-bis (citraconimidomethyl)benzene can make a crosslink of which heat resistance is higher than the sulfur crosslink and which has a flexibility similar to the sulfur crosslink, therefore, the increased complex elastic modulus can be maintained without sacrificing the loss tangent and rupture strength.
Thus, the use of 1,3-bis(citraconimidomethyl)benzene is preferred.

The content of the anti-reversion agent is preferably set in a range of from 1.0 to 3.0 parts by mass with respect to 100 parts by mass of the base rubber.
For example, such 1,3-bis(citraconimidomethyl)benzene is available from Flexsys K.K.

According to the present invention, the problems (1) the decrease in the rupture strength and cord adhesion due to the use of the modified BR and/or modified SBR, and (2) the decrease in the complex elastic modulus and rupture strength due to the decreased content of the reinforcing agent, can be solved by peculiarly controlling the temperature of the tire during vulcanization. Thus, the topping rubber 21 is improved in the rupture strength, cord adhesion and complex elastic modulus, and the tire durability can be improved and the advantageous less heat generation property of the topping rubber 21 is enhanced. And the decrease in the rolling resistance is furthered.

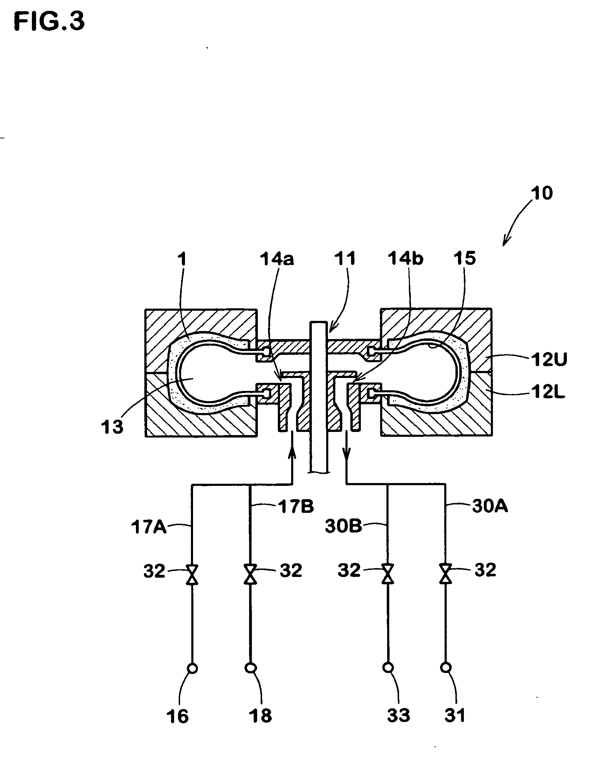

As schematically shown in Fig.3, in order to vulcanize the green tire 1, the green tire 1 is put in the mold 10. In the tire heating process, the tire 1 is heated from the inside of the tire by a high-temperature heating medium and from the outside of the tire by the mold 10 heated.

The mold 10 comprises an upper die 12U and lower die 12L which are annular and surround a central mechanism 11. The upper die 12U and lower die 12L have parting surfaces contacting with each other. Between the upper die 12U and lower die 12L, a vulcanization chamber 13 having an inside shape corresponding to the outside shape of the vulcanized tire is formed.

The upper die 12U and lower die 12L are each provided with a heater such as electric heater, steam heater or the like to heat the green tire 1 from the outside of the tire through the inner surface of the mold.

The central mechanism 11 is provided with a supply port 14a and a return port 14b for a heating medium to and from the vulcanization chamber 13. In this embodiment, in order to avoid a direct contact between the heating medium and the tire, a expandable bladder 15 made of rubber is disposed so as to cover the ports 14a and 14b.

A heater pipe 17A and a pressure pipe 17B are both connected to the supply port 14a.
The heater pipe 17A extends from a heating medium supply source 16 to convey a heating medium to the vulcanization chamber 13 in order to heat the green tire 1 from the inside.
The pressure pipe 17B extends from a pressurization medium supply source 18 to convey a pressurization medium to the vulcanization chamber 13 in order to pressurize the inside of the tire 1.

A exhaust pipe 30A and a exhaust pipe 30B are both connected to the return port 14b.
The other end of the exhaust pipe 30A is connected to a suction pump 31 in order to contract the bladder 15 and take out the vulcanized tire from the mold 10.
The exhaust pipe 30B is connected to a heat recovery and medium circulating system 33.

Each of the heater pipe 17A, pressure pipe 17B, exhaust pipe 30A and exhaust pipe 30B is provided with a switching valve 32.

In the tire heating process, in order that the green tire 1 is vulcanized from the outside and inside,
the temperature T1 of the mold 10 at the inner surface contacting with the tire is controlled within a range of from 140 to 165 deg.C (hereinafter "mold temperature control") and the maximum temperature T2 of the rubber in a cord near region or a neighboring region Y of the belt cords 20 is controlled within a range of from 140 to 148 deg.C (hereinafter "topping rubber temperature control").
As shown in Fig.2, the cord near region Y means that the distance L from the surfaces of the belt cords 20 is not more than 3 mm.

In the initial stage of the vulcanization, the sulfur in the topping rubber especially in the cord near region Y moves or migrates towards the surface of the belt cord, and reacts to a component of a plated layer on the surface of the belt cord and an adhesive layer of the sulfide is formed. Thus, the cord near region Y has a strong influence upon the concentration gradient of the sulfur.

In general, the speed of migration of sulfur is faster in a position nearer to the surface of the belt cord. Therefore, a region in which the sulfur concentration is very small tends to be formed near the belt cords (hereinafter, "less-sulfur region") because the inflow of the sulfur from the outside becomes more than the outflow of the sulfur to the belt cords. If such a less-sulfur region is formed, the crosslinking density of the rubber becomes decreased and uneven, which results in a weak point of the strength, therefore, it is difficult to obtain a strong cord adhesion.

In order to solve this problem by the mold temperature control, the temperature T1 of the mold 10 is controlled under 165 deg.C.

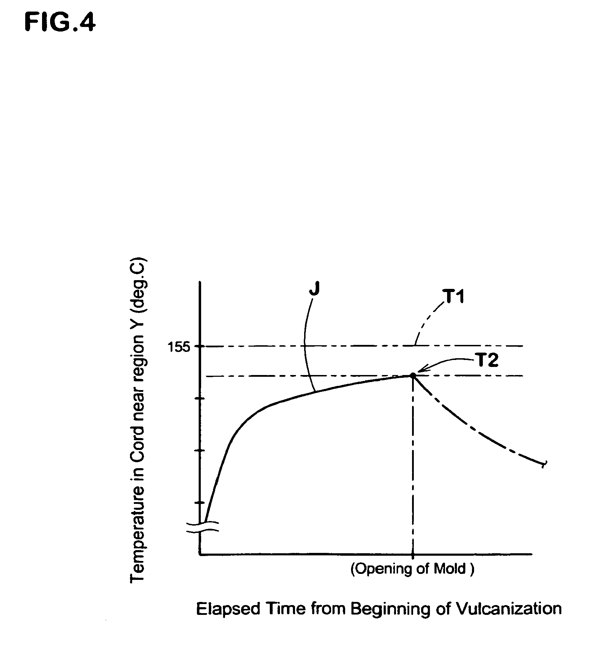

Fig.4 shows an exemplary curve J of temperature-elapsed time in the cord near region Y during heating process according to the present invention.

The mold temperature control moderately increases the temperature in the initial stage of the vulcanization. As a result, the difference from the outflow of the sulfur from the neighboring region Y and the inflow thereto is decreased. Thus, the formation of the less-sulfur region is prevented or minimized, and the cord adhesion is improved.

Since the temperature T1 of the mold 10 and the maximum temperature T2 in the cord near region Y are not more than 165 and 148 deg.C, respectively, the rupture strength and complex elastic modulus of the topping rubber 21 are increased, and the loss tangent is further decreased. The reason therefor is as follows: Due to the relatively low temperatures T1 and T2, the occurrence of reversion resulting from a higher content of sulfur (namely, a polymer chain is broken, sulfur is combined with the polymer chain like a pendant, and the polymer transforms from cis to trans) can be prevented or decreased, and a high content of the sulfur effectively demonstrates its function. Accordingly, the crosslinking density is increased and evened. As a result, the rupture strength and complex elastic modulus are increased.

If the temperature T1 and T2 are increased over 165 deg.C, it is difficult to improve the rupture strength, complex elastic modulus and loss tangent. If the temperature T1 and T2 are lower than 140 deg.C, it is difficult to improve the rupture strength, complex elastic modulus and loss tangent. Further, the vulcanization time is remarkably increased and accordingly the production efficiency is decreased. In this light, the temperature T1 is preferably set to be less than 165 deg.C, more preferably not more than 160 deg.C, but not less than 150 deg.C. According to the present invention, the maximum temperature T2 is not more than the temperature T1 and not more than 148 deg.C.
Here, the temperature T1 is the temperature of the part of the inner surface of the mold 10 which contacts with the tread portion 2. In this embodiment, in order to measure the temperature T1, a plurality of temperature sensors are mounted on the inner surface of the mold so as to contact with the tread surface of the tire 1.

The mold temperature control controls the temperature T1 by controlling the temperature of the heater of the mold 10.

Meanwhile, the topping rubber temperature control controls the maximum temperature T2 by changing the time of supplying the fresh heating medium.
The heating medium is a high-temperature fluid having a large heat capacity. Liquids can be used, but preferably gases such as saturated steam is used. For example, the temperature of the steam is 180 to 210 deg.C.
Depending on the temperature T1, maximum temperature T2 and others, the total time of supplying the heating medium may be changed, but usually it is in a range of from 20 to 150 seconds. The above-mentioned pressurization medium is also used to control or lower the temperature. The pressurization medium is for example, high-pressure inactive gases such as nitrogen gas or relatively low temperature water, and such pressurization medium is supplied instead of supplying the heating medium.

In the example shown in Fig.4, the temperature is controlled as follows. As the vulcanizing time is elapsed, the temperature is increased. As the temperature approaches to the temperature T1 of the mold 10, the gradient of the elapsed time-temperature curve J becomes gradual. when the temperature reaches to the maximum temperature T2, the vulcanization is finished, and the split mold 10 is opened.

### * Comparison Tests

Radial tire of size 195/65R15 (rim size 6X15JJ) for passenger cars having the specifications shown in Tables 1 and 2 were prepared and tested for rolling resistance and belt durability. Further, the complex elastic modulus E*, loss tangent(tan delta), and elongation at rupture of the belt-cord topping rubber was measured using cutout samples.

In the tire heating process, saturated steam of a temperature of 200 deg.C was used as the heating medium.

with respect to the belt cord topping rubber, the rubber, reinforcing agent and additives referred in Tables 1 and 2 are as follows:
natural rubber NR: TSR20
modified BR(1): BR1250H, ZEON Corporation
modified BR(2): polybutadiene rubber,
   Sumitomo Chemical Co., Ltd.
modified SBR: HPR340, JSR Corporation
carbon black: N326, CABOT Japan K.K.
silica: Z115Gr, Rhodia Japan Ltd.
vulcanization accelerator DCBS: Accel DZ-G,
   Kawaguchi chemical Industry Co., LTD.
vulcanization accelerator TBSI: Santocure TBSI,
   Flexsys K.K.
modified resorcinol condensate: Sumikanol 620,
   TAOKA chemical Co,. Ltd.
methylene donor: Sumikanol 507A,
   TAOKA Chemical Co,. Ltd.
Common additives (contents are shown in Table 3) are as follows:
hydrozincite: Ginrei R, Toho zinc Co., Ltd.
cobalt stearate: Cost-F, DIC Corporation
aroma oil: Process X-140, Japan Energy Corporation
insoluble sulfur: crystex HSOT20, Flexsys K.K.
   (sulfur 80 mass %, oil 20 mass %)
age resistor: Norac 6C, ouchi shinko chemical industrial co.,ltd.
anti-reversion agents: Perkalink 900, Flexsys K.K.

### (1) Rolling resistance test:

Using a rolling resistance tester, the rolling resistance of the test tire was measured under the conditions (inner pressure 200 kPa, tire load 6.96 kN, speed 80 km/H). The results are indicated by an index based on Ref.1 being 100, wherein the larger the value, the better the rolling resistance.

### (2) Belt durability test:

Using a tire test drum, the test tire was run continuously under the conditions (inner pressure 200 kPa, tire load 6.96 kN, speed 80 km/H) and the running distance was measured until belt failure occured. The results are indicated by an index based on Ref.1 being 100, wherein the larger the value, the better the durability.

### (3) Complex elastic modulus and loss tangent:

Using a viscoelastic spectrometer, the topping rubber samples were measured for the complex elastic modulus E* and loss tangent(tan delta) under the following conditions: initial strain 10 %, dynamic strain 2 %, frequency 10 Hz, temperature 30 deg.C.
As to the complex elastic modulus E*, the measured values within a range of 5 to 7 MPa are preferable.
As to the loss tangent (tan delta), the lower values are better.

### (4) Elongation at rupture:

According to Japanese Industrial Standard K 6251 "Rubber, vulcanized or thermoplastic - Determination of tensile stress - strain properties", a tensile test was carried out and the elongation at rupture (%) of the topping rubber samples was measured. The larger vales are better

It was confirmed from Tables 1 and 2 that, according to the present invention, the rolling resistance can be greatly reduced while improving the durability.

**Table 1**

| Tire | Ex.1 | Ex.2* | Ex.3* | Ex.4 | Ex.5* | Ref.1 | Ref.2 | Ref.3 | Ref.4 | Ref.5 |
|---|---|---|---|---|---|---|---|---|---|---|
| <heating process> | | | | | | | | | | |
| mold temperature T1 (deg.C) | 155 | 165 | 165 | 145 | 165 | 185 | 155 | 165 | 135 | 185 |
| max. temperature T2 | | | | | | | | | | |
| near belt cords (deg.C) | 148 | 158 | 160 | 141 | 164 | 183 | 166 | 166 | 167 | 176 |
| time of supplying | | | | | | | | | | |
| heating medium (min.) | 0.5 | 0.5 | 1.5 | 1.5 | 2.5 | 2.5 | 3.5 | 3 | 3 | 0.5 |
| vulcanization time (min.) | 20.0 | 18.5 | 17.0 | 27.0 | 16.0 | 9.0 | 16.5 | 15.0 | 52.0 | 10.0 |
| <topping rubber> | | | | | | | | | | |
| natural rubber NR | 75 | 75 | 75 | 75 | 75 | 75 | 75 | 75 | 75 | 75 |
| modified BR(1) | 25 | 25 | 25 | 25 | 25 | 25 | 25 | 25 | 25 | 25 |
| modified BR(2) | -- | -- | -- | -- | -- | -- | -- | -- | -- | -- |
| modified SBR | -- | -- | -- | -- | -- | -- | -- | -- | -- | -- |
| reinforcing agent | 50 | 50 | 50 | 50 | 50 | 50 | 50 | 50 | 50 | 50 |
| carbon black | 40 | 40 | 40 | 40 | 40 | 40 | 40 | 40 | 40 | 40 |
| silica | 10 | 10 | 10 | 10 | 10 | 10 | 10 | 10 | 10 | 10 |
| accelerator (DCBS) | 1.0 | 1.0 | 1.0 | 1.0 | 1.0 | 1.0 | 1.0 | 1.0 | 1.0 | 1.0 |
| modified resorcin condensate | -- | -- | -- | -- | -- | -- | -- | -- | -- | -- |
| methylene donor common additives (see Table 3) | -- | -- | -- | -- | -- | -- | -- | -- | -- | -- |
| modulus E* (MPa) | 6.2 | 6.1 | 5.9 | 6.3 | 5.7 | 5.5 | 5.6 | 5.6 | 5.5 | 5.5 |
| loss tangent | 0.088 | 0.09 | 0.092 | 0.087 | 0.093 | 0.097 | 0.094 | 0.095 | 0.096 | 0.097 |
| elongation at rupture (%) | 330 | 315 | 305 | 340 | 295 | 250 | 270 | 275 | 260 | 265 |
| <tire characteristic> | | | | | | | | | | |
| rolling resistance (index) | 104 | 103 | 102 | 104 | 101 | 100 | 101 | 101 | 100 | 100 |
| belt durability (index) | 150 | 141 | 135 | 132 | 115 | 100 | 105 | 105 | 102 | 101 |

| | | | | | | | | | | |
|---|---|---|---|---|---|---|---|---|---|---|
| * not according to the invention | | | | | | | | | | |

**Table 2**

| Tire | Ex.6 | Ex.7 | Ex.8 | Ex.9 | Ex.10 | Ex.11 | Ref.6 | Ref.7 | Ref.8 | Ref.9 | Ref.10 |
|---|---|---|---|---|---|---|---|---|---|---|---|
| <heating process> | | | | | | | | | | | |
| mold temperature T1 (deg.C) | 155 | 155 | 155 | 155 | 155 | 155 | 185 | 155 | 155 | 155 | 155 |
| max. temperature T2 | | | | | | | | | | | |
| near belt cords (deg.C) | 148 | 148 | 148 | 148 | 148 | 148 | 183 | 148 | 148 | 148 | 148 |
| time of supplying | | | | | | | | | | | |
| heating medium (min.) | 0.5 | 0.5 | 0.5 | 0.5 | 0.5 | 0.5 | 2.5 | 0.5 | 0.5 | 0.5 | 0.5 |
| vulcanization time (min.) | 20.0 | 20.0 | 20.0 | 20.0 | 20.0 | 20.0 | 9.0 | 20.0 | 20.0 | 20.0 | 20.0 |
| <topping rubber> | | | | | | | | | | | |
| natural rubber NR | 60 | 75 | 75 | 75 | 75 | 75 | 100 | 100 | 75 | 75 | 75 |
| modified BR(1) | 40 | -- | 25 | -- | 25 | 25 | -- | -- | 25 | 25 | 25 |
| modified BR(2) | -- | 25 | -- | -- | -- | -- | -- | -- | -- | -- | -- |
| modified SBR | -- | -- | -- | 25 | -- | -- | -- | -- | -- | -- | -- |
| reinforcing agent | 50 | 50 | 40 | 50 | 45 | 45 | 50 | 50 | 24 | 60 | 60 |
| carbon black | 40 | 40 | 30 | 40 | 35 | 35 | 40 | 40 | 15 | 50 | 60 |
| silica | 10 | 10 | 10 | 10 | 10 | 10 | 10 | 10 | 9 | 10 | -- |
| accelerator (DCBS) | 1.0 | 1.0 | 1.2 | 1.0 | 1.0 | -- | 1.0 | 1.0 | 1.4 | 0.9 | 0.9 |
| accelerator(TBSI) | -- | -- | -- | -- | -- | 1.0 | -- | -- | -- | -- | -- |
| modified resorcin condensate | -- | -- | -- | -- | 1.5 | 1.5 | -- | -- | -- | -- | -- |
| methylene donor common additives (see Table 3) | -- | -- | -- | -- | 1.8 | 1.8 | -- | -- | -- | -- | -- |
| modulus E* (MPa) | 5.8 | 6.1 | 5.6 | 6.6 | 6.3 | 6.5 | 5.7 | 6.3 | 4.2 | 6.3 | 8.1 |
| loss tangent | 0.075 | 0.091 | 0.07 | 0.091 | 0.079 | 0.077 | 0.155 | 0.131 | 0.058 | 0.11 | 0.129 |
| elongation at rupture (%) | 300 | 310 | 250 | 250 | 420 | 420 | 395 | 470 | 190 | 460 | 410 |
| <tire characteristic> | | | | | | | | | | | |
| rolling resistance (index) | 106 | 103 | 107 | 103 | 106 | 107 | 91 | 95 | 113 3 | 97 | 95 |
| belt durability (index) | 132 | 140 | 103 | 102 | 190 | 200 | 85 | 106 | 35 | 190 | 165 |

**Table 3**

| <common additives> | |
|---|---|
| hydrozindte | 10.0 |
| cobalt stearate | 1.5 |
| aroma oil | 2.0 |
| insoluble sulfur | 7.0 |
| age resistor | 1.0 |
| anti-reversion agents | 2.0 |

## Claims

1. A method for manufacturing a pneumatic tire comprising the steps of:
preparing a green tire (1) provided in a tread portion (2) with a belt (7) composed of steel cords (20) embedded in a unvulcanized topping rubber (21);
putting the green tire (1) in a mold (10); and
vulcanizing the green tire (1) together with the unvulcanized topping rubber (21) by heating the green tire (1) from the inside of the tire with a high-temperature heating medium and from the outside of the tire with the mold (10) heated, **characterized in that**
the unvulcanized topping rubber (21) comprises 100 parts by mass of base rubber, 25 to 55 parts by mass of carbon black and/or silica, and sulfur;
the base rubber comprises 10 to 45 mass % of modified butadiene rubber and/or modified styrene butadiene rubber with respect to 100 mass % of the base rubber; and
in the step of vulcanizing the green tire (1), the maximum temperature (T2) of the topping rubber (21) in a cord near region (Y) within 3 mm distance from the surfaces of the belt cords (20) is in a range of from 140 to 148 deg.C.

2. The method for manufacturing a tire according to claim 1, wherein,
in the step of vulcanizing the green tire (1), the temperature (T1) of the mold (10) is set within a range of from 140 to 165 deg.C, and
the step of vulcanizing the green tire (1) comprises controlling the supplying time of the heating medium to the inside of the tire (1) so that the maximum temperature (T2) in the cord near region (Y) is limited within the above-mentioned range of from 140 to 148 deg.C.

3. The method for manufacturing a tire according to claim 1 or 2, wherein
the topping rubber (21) comprises 5 to 55 parts by mass of silica with respect to 100 parts by mass of the base rubber.

4. The method for manufacturing a tire according to claim 1 or 2, wherein
the topping rubber (21) comprises 0.5 to 3.0 parts by mass of at least one compound selected from resorcin, resorcinol condensate, modified resorcinol condensate, cresol resin, and modified cresol resin with respect to 100 parts by mass of the base rubber.

5. The method for manufacturing a tire according to claim 1 or 2, wherein
the topping rubber (21) comprises 5 to 55 parts by mass of silica, and
0.5 to 3.0 parts by mass of at least one compound selected from resorcin, resorcinol condensate, modified resorcinol condensate, cresol resin, and modified cresol resin
with respect to 100 parts by mass of the base rubber.

## Patentansprüche

1. Verfahren zum Herstellen eines Luftreifens mit den Schritten, dass:
ein Rohreifen (1) vorbereitet wird, der in einem Laufflächenabschnitt (2) mit einem Gürtel (7) versehen wird, der aus Stahlkorden (20) zusammengesetzt wird, die in einem unvulkanisierten Gummierungskautschuk (21) eingebettet werden;
der Rohreifen (1) in eine Form (10) eingesetzt wird; und
der Rohreifen (1) zusammen mit dem unvulkanisierten Gummierungskautschuk (21) vulkanisiert wird, indem der Rohreifen (1) von der Innenseite des Reifens aus mit einem Hochtemperatur-Heizmedium und von der Außenseite des Reifens aus mit der erwärmten Form (10) erwärmt wird,
**dadurch gekennzeichnet, dass**
der unvulkanisierte Gummierungskautschuk (21) 100 Masse-Teile Basiskautschuk, 25 bis 55 Masse-Teile Ruß und/oder Silica und Schwefel umfasst;
der Basiskautschuk 10 bis 45 Masse-% eines modifizierten Butadienkautschuks und/oder eines modifizierten Styrolbutadienkautschuks mit Bezug auf 100 Masse-% des Basiskautschuks umfasst; und
in dem Schritt des Vulkanisierens des Rohreifens (1) die maximale Temperatur (T2) des Gummierungskautschuks (21) in einem kordnahen Bereich (Y) innerhalb von 3 mm Abstand von den Oberflächen der Gürtelkorde (20) innerhalb eines Bereichs von 140 bis 148 Grad C liegt.

2. Verfahren zum Herstellen eines Reifens nach Anspruch 1, wobei
in dem Schritt des Vulkanisierens des Rohreifens (1) die Temperatur (T1) der Form (10) in einem Bereich von 140 bis 165 Grad C eingestellt wird, und
der Schritt des Vulkanisierens des Rohreifens (1) umfasst, dass die Zufuhrzeit des Heizmediums zu der Innenseite des Reifens (1) derart gesteuert wird, dass die maximale Temperatur (T2) in den kordnahen Bereich (Y) innerhalb des oben erwähnten Bereichs von 140 bis 148 Grad C begrenzt wird.

3. Verfahren zum Herstellen eines Reifens nach Anspruch 1 oder 2, wobei
der Gummierungskautschuk (21) 5 bis 55 Masse-Teile Silica mit Bezug auf 100 Masse-Teile des Basiskautschuks umfasst.

4. Verfahren zum Herstellen eines Reifens nach Anspruch 1 oder 2, wobei
der Gummierungskautschuk (21) 0,5 bis 3,0 Masse-Teile zumindest einer Verbindung, die aus Resorcin, Resorcinolkondensat, modifiziertem Resorcinolkondensat, Cresolharz und modifiziertem Cresolharz gewählt wird, mit Bezug auf 100 Masse-Teile des Basiskautschuks umfasst.

5. Verfahren zum Herstellen eines Reifens nach Anspruch 1 oder 2, wobei
der Gummierungskautschuk (21) 5 bis 55 Masse-Teile Silica und
0,5 bis 3,0 Masse-Teile von zumindest einer Verbindung, die aus Resorcin, Resorcinolkondensat, modifiziertem Resorcinolkondensat, Cresolharz und modifiziertem Cresolharz geählt wird,
mit Bezug auf 100 Masse-Teile des Basiskautschuks umfasst.

## Revendications

1. Procédé pour fabriquer un bandage pneumatique, comprenant les étapes consistant à :
préparer un pneumatique cru (1) doté dans une portion de roulement (2) d'une ceinture (7) composée de câblés en acier (20) noyés dans un caoutchouc de doublage non vulcanisé (21) ;
placer le pneumatique cru (1) dans un moule (10) ; et
vulcaniser le pneumatique cru (1) ensemble avec le caoutchouc de doublage non vulcanisé (21) en chauffant le pneumatique cru (1) depuis l'intérieur du pneumatique avec un fluide de chauffage à haute température et depuis l'extérieur du pneumatique avec le moule (10) chauffé, **caractérisé en ce que**
le caoutchouc de doublage non vulcanisé (21) comprend 100 parties en masse de caoutchouc de base, 25 à 55 parties en masse de noir de carbone et/ou de silice, et du soufre ;
le caoutchouc de base comprend 10 à 45 % en masse de caoutchouc butadiène modifié et/ou de caoutchouc butadiène-styrène modifié par rapport à 100 % en masse du caoutchouc de base ; et
dans l'étape de vulcanisation du pneumatique cru (1), la température maximum (T2) du caoutchouc de doublage (21) dans une région (Y) proche des câblés à l'intérieur d'une distance de 3 mm depuis les surfaces des câblés de ceinture (20) est dans une plage de 140 à 148° C.

2. Procédé pour fabriquer un bandage pneumatique selon la revendication 1, dans lequel,
dans l'étape de vulcanisation du pneumatique cru (1), la température (T1) du moule (10) est fixée dans une plage de 140 à 165° C, et
l'étape de vulcanisation du pneumatique cru (1) comprend de commander le temps d'alimentation du fluide chauffant vers l'intérieur du pneumatique (1) de sorte que la température maximum (T2) dans la région proche des câblés (Y) est limitée dans la plage mentionnée ci-dessus de 140 à 148° C.

3. Procédé pour fabriquer un pneumatique selon la revendication 1 ou 2, dans lequel
le caoutchouc de doublage (21) comprend de 5 à 55 parties en masse de silice par rapport à 100 parties en masse de caoutchouc de base.

4. Procédé pour fabriquer un pneumatique selon la revendication 1 ou 2, dans lequel
le caoutchouc de doublage (21) comprend de 0,5 à 3,0 parties en masse d'au moins un composé choisi parmi résorcine, condensat au résorcinol, condensat au résorcinol modifié, résine au crésol, et résine au crésol modifié par rapport à 100 parties en masse du caoutchouc de base.

5. Procédé pour fabriquer un pneumatique selon la revendication 1 ou 2, dans lequel
le caoutchouc de doublage (21) comprend de 5 à 55 parties en masse de silice, et
de 0,5 à 3,0 parties en masse d'au moins un composé choisi parmi résorcine, condensat au résorcinol, condensat au résorcinol modifié, résine au crésol, et résine au crésol modifié
par rapport à 100 parties en masse du caoutchouc de base.
